# EUROPEAN PATENT APPLICATION

(11) **EP 4 152 446 A1**
(43) Date of publication of application: **22.03.2023**
(21) Application number: 21197534.7
(22) Date of filing: 17.09.2021
(51) Int. Cl.: H01M 4/86, H01M 8/12

(54) **FUEL CELL WITH INCREASED GRAVIMETRIC POWER DENSITY**

(71) Applicant: Airbus SAS, 31707 Blagnac (FR); Airbus Operations GmbH, 21129 Hamburg (DE)
(72) Inventor: FRIEDL, Stephan, 21129 Hamburg (DE); NEHTER, Pedro, 21129 Hamburg (DE); GEISLER, Helge, 21129 Hamburg (DE); AHILAN, Vignesh, 21129 Hamburg (DE)
(74) Representative: LKGLOBAL Lorenz & Kopf PartG mbB Patentanwälte

(57) **Abstract**

A fuel cell (10) with increased gravimetric power density is described. The fuel cell (10) comprises a first electrode (12), a second electrode (14) and an electrolyte (16). The first electrode (12) is connected to a first side of the electrolyte (16) and the second electrode (14) is connected to a second side, arranged on the opposite side, of the electrolyte (16). A first current collector (18) is connected to the first electrode (12) and a second current collector (20) is connected to the second electrode (14). The first electrode (12) extends in a first longitudinal direction, substantially parallel to the current flow with respect to the first current collector (18). A mass distribution of the first electrode (12) is decreasing in the first direction with increasing distance to the first current collector (18).

## Description

### Technical Field

The description relates to a fuel cell and an aircraft comprising said fuel cell. In particular, the description relates to a fuel cell with increased gravimetric power density.

### Technical Background

Fuel cells are known to convert chemical energy into electrical energy with highest electrical efficiencies. The Solid Oxide Fuel Cell (SOFC) and Protonic Ceramic Fuel Cell (PCC) are due to their high operating temperature (>600°C) known for the lowest entropy production and thus predestined to achieve highest efficiencies in combination with thermal bottoming cycles. The main components of a typical SOFC and PCC stack are the cells and the interconnectors in order to connect multiple planar cells electrically in series and furthermore to achieve practical usable voltages. The cell consists of an oxide conducting ceramic electrolyte (SOFC) or proton conduction ceramic electrolyte (PCC), covered with a negative electrode (anode) on the fuel side and positive electrode (cathode) on the air side. In addition to the main electrochemical purpose of the fuel cell's functional layers, the mechanical stability of the cell has to be provided by at least one of these three functional layers. Four concepts, the anode supported (ASC), metal supported (MSC), the electrolyte supported (ESC) and the cathode supported cell are known in this context, whereas the respective mechanical support layer is typically designed much thicker than the other functional layers. The metallic interconnector is used to electrically connect each cell of the stack to its neighbour cell, to separate the fuel from the air gas channel of two neighboring cells and to host the gas channels to supply the gaseous reactants to the individual cell electrodes. The electrical current is hereby transferred in a perpendicular direction to the cell area, which enables an efficient current collection as a comparably large area with low ohmic electronic resistance can be used. This concept is known to be a promising solution for stationary power generation application. Even though the planar concept offers low current collection losses, the interconnector is one of the heaviest parts of a planar stack. The interconnector can take up to 70% of the total weight of a planar stack. Thus, the potential to increase the gravimetric power density of planar SOFC and PCC stacks to the required level for mobile and portable applications can strongly be limited by the weight of the metallic interconnector plates.

Tubular and monolithic cell designs offer a major optimization potential for the SOFC technology because the interconnector plates are not mandatory to be implemented neither for current collection nor for the separation of the fuel and air gas channels. These concepts are known to make use of a current collection in the longitudinal direction of the cell along the in-plane cross section of the electrodes. The gravimetric optimization is thus governed by a typical tradeoff between the weight of the electrodes and their electronic conductivities. The thinner the electrodes, the lighter the cell but the higher the ohmic current collection losses. Thus, the contribution of the area on the opposite side of the current collector to the total power of the cell is strongly limited, represented by the local current density.

### Summary

It may be seen as an object to provide a fuel cell with increased gravimetric power density. This object is solved by the subject matter of the independent claims.

The object is to increase the gravimetric power density of the cell by designing the electrode in a way that the electronic conductivity is adapted to the current that accumulates within the anode e.g. in the direction of the current collector and to the current that is distributed within the cathode e.g. from the direction of the current collector.

A fuel cell and an aircraft according to the features of the independent claims is provided. Further developments of the invention can be derived from the dependent claims and from the following description.

According to an aspect, a fuel cell comprises a first electrode, a second electrode and an electrolyte. The first electrode is connected to a first side of the electrolyte, and the second electrode is connected to a second side, arranged on the opposite side, of the electrolyte. A first current collector is connected to the first electrode, and a second current collector is connected to the second electrode. The first electrode extends in a first longitudinal direction, substantially parallel to the current flow with respect to the first current collector. A mass distribution of the first electrode is decreasing in the first direction with increasing distance to the first current collector.

An electrode in an electrochemical fuel cell is referred to as either an anode or a cathode. The anode is defined as the electrode at which electrons leave the cell and oxidation occurs, and the cathode as the electrode at which electrons enter the cell and reduction occurs. Each electrode may become either the anode or the cathode depending on the direction of current through the cell.

The mass distribution refers to the distribution of the mass in a distinct volume. The volume is preferably defined by the cross section with the largest area perpendicular to the first longitudinal direction and the distance along the first longitudinal direction. Preferably, the weight of the fuel cell with decreasing mass distribution in the first longitudinal direction with increasing distance to the first current collector is for this comparison remained to be the same as the standard cell as the amount of anode material is equal, but redistributed. The positive effect on the power density can be derived from the higher average current density that is achieved at an equal cell voltage. The mass distribution may also be referred to as a mass redistribution.

According to an embodiment, the second electrode extends in a second longitudinal direction, substantially parallel to the current flow with respect to the second current collector. A mass distribution of the second electrode is decreasing in the second longitudinal direction with increasing distance to the second current collector.

The mass distribution refers to the distribution of the mass in a distinct volume. The volume is preferably defined by the cross section of the second electrode with the largest area perpendicular to the second longitudinal direction and the distance along the second longitudinal direction. Preferably, the weight of the fuel cell with decreasing mass distribution in the second longitudinal direction with increasing distance to the second current collector is for this comparison remained to be the same as the standard cell as the amount of anode material is equal, but redistributed. The positive effect on the power density can be derived from the higher average current density that is achieved at an equal cell voltage.

According to a further embodiment, the fuel cell further comprises a third current collector, connected to the first electrode, wherein the first electrode extends in a third longitudinal direction, substantially parallel to the current flow with respect to the third current collector. The mass distribution of the first electrode is decreasing in the third longitudinal direction with increasing distance to the third current collector.

The mass distribution refers to the distribution of the mass in a distinct volume. The volume is preferably defined by the cross section with the largest area perpendicular to the third longitudinal direction and the distance along the third longitudinal direction. Preferably, the weight of the fuel cell with de creasing mass distribution in the third longitudinal direction with increasing distance to the third current collector is for this comparison remained to be the same as the standard cell as the amount of anode material is equal, but redistributed.

According to a further embodiment, the fuel cell further comprises a fourth current collector, connected to the second electrode. The second electrode extends in a fourth longitudinal direction, substantially parallel to the current flow with respect to the fourth current collector. The mass distribution of the second electrode is de creasing in the fourth longitudinal direction with increasing distance to the fourth current collector.

The mass distribution refers to the distribution of the mass in a distinct volume. The volume is preferably defined by the cross section with the largest area perpendicular to the fourth longitudinal direction and the distance along the fourth longitudinal direction. The weight of the fuel cell with decreasing mass distribution in the fourth longitudinal direction with increasing distance to the fourth current collector is for this comparison remained to be the same as the standard cell as the amount of anode material is equal, but redistributed.

The mass distribution is particularly increased in areas where a high accumulated current flows in the longitudinal directions of the first and/or second electrode and vice versa decreased in areas where the accumulated current is comparably low.

According to a further embodiment, the electrolyte comprises two or more electrolyte materials. In this embodiment, two or more electrolyte materials are used within one cell, either manufactured in the way that a clear boundary exists between the different electrolyte materials or a gradual depleted and enriched mixture of the materials in the longitudinal direction of the electrolyte is applied. The local allocation of the electrolyte materials is adapted furthermore with respect to their temperature dependent conductivities and material stabilties.

According to a further embodiment, the electrolyte materials comprise 8YSZ and 10ScSZ. Yttria-stabilized zirconia (YSZ) is a ceramic in which the cubic crystal structure of zirconium dioxide is made stable at room temperature by an addition of yttrium oxide. These oxides are commonly called "zirconia" (ZrO₂) and "yttria" (Y₂O₃). ScSZ electrolyte exhibits a higher ionic conductivity compared to other zirconia electrolytes, which may offer advantages, especially at lower temperature.

According to a further embodiment, the mass distribution of the first electrode and/or second electrode is decreasing by a thickness reduction of the first electrode and/or the second electrode. The thickness reduction is considered to be shaped in a linear or curved way, or following a quadratic function.

The optimum electrode mass distribution, with respect to its electronic conductivity, may be limited by the mechanical stability which has to be maintained by the electrode.

According to a further embodiment, a thickness of the electrolyte varies, such that a thickness of the fuel cell can be maintained constant if required for stacking purposes is substantially constant, preferably constant, in order to reinforce the mechanical stability of the fuel cell.

According to a further embodiment, the fuel cell further comprises an additional support layer, wherein a thickness of the additional support layer varies, such that the thickness of the fuel cell can be maintained constant if required for stacking purposes is substantially constant, in order to reinforce the mechanical stability of the fuel cell.
According to a further embodiment, the additional support layer comprises a high temperature resistant metal or a ceramic.

According to a further embodiment, the mass distribution of the first electrode and/ or the second electrode is decreasing by a change in porosity of the first electrode and/or the second electrode. Such an inhomogeneous microstructure will result in a varying electronic conductivity and density along the electrode length. As the accumulated current increases again in areas closer to the current collector, which can occur also in the second longitudinal dimension, the electrode is chosen to be less porous again in order to provide a sufficient electronic conductivity close to the current collectors.

According to a further embodiment, the first electrode and/or the second electrode comprise an electrode body and an additional highly conductive layer.

The additional highly conductive layer, preferably a silver layer, is known as an efficient current collector for fuel cells.

According to a further embodiment, the weight distribution a thickness of the highly conductive layer is reduced with increasing distance to the current collectors. The weight distribution of the highly conductive layer thickness is particularly increased in areas where a high accumulated current flows in the longitudinal direction of the current collector and vice versa decreased in areas where the accumulated current is comparably low.

According to a further embodiment, the fuel cell is one of a tubular fuel cell, a flat tubular fuel cell or a monolithic fuel cell.

According to an embodiment, an aircraft comprises a fuel cell. The aircraft may be an airplane, a helicopter, a drone or the like.

### Brief description of the drawings

The subject matter will hereinafter be described in conjunction with the following drawing figures, wherein like numerals denote like elements, and wherein:
Fig. 1 is a schematic representation of a cross section of a fuel cell comprising a first electrode with increasing thickness in a first longitudinal direction to the current collector.
Fig. 2 is a comparison of the local current density perpendicular to the longitudinal direction of the electrolyte of a standard cell with a fuel cell with an electrode with decreased mass distribution.
Fig. 3 is another schematic representation of a cross section of a fuel cell comprising a first electrode with increasing thickness in a first and second longitudinal direction.
Fig. 4 is another schematic representation of a cross section of a fuel cell comprising a first electrode with increasing porosity in a first longitudinal direction to the current collector.
Fig. 5 is another schematic representation of a cross section of a fuel cell comprising a first electrode with increasing porosity in a first and second longitudinal direction to the current collectors.
Fig. 6 is another schematic representation of a cross section of a fuel cell comprising a first electrode with increasing thickness in a first longitudinal direction end and electrolyte with an opposite thickness shape.
Fig. 7 is another schematic representation of Fig. 6, wherein the electrolyte comprises two different electrolytes.
Fig. 8 is another schematic representation of Fig. 6 comprising a second electrode with increasing thickness in a second longitudinal direction.
Fig. 9 is another schematic representation of a cross section of a fuel cell comprising a support layer.
Fig. 10 is another schematic representation of a cross section of a fuel cell comprising a highly conductive layer with increasing thickness in a first longitudinal direction.
Fig. 11 is another schematic representation of a cross section of a fuel cell with a highly conductive layer with increasing thickness in a first and second longitudinal direction.
Fig. 12 is a schematic representation of an aircraft with a fuel cell.

### Detailed description of the drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

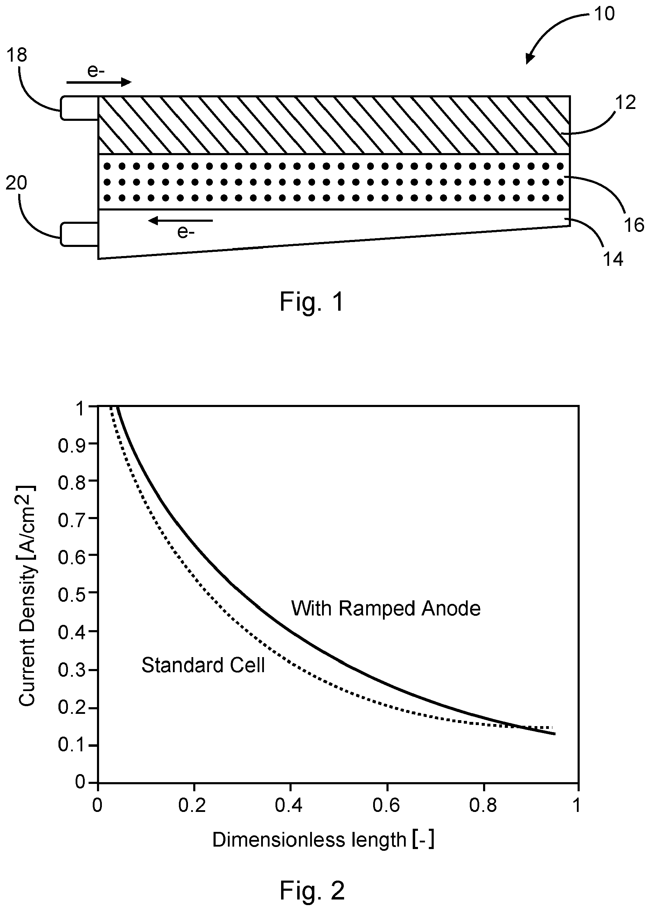

Fig. 1 shows a schematic representation of a fuel cell 10 with a first electrode 12 with reduced thickness at one end. The fuel cell 10 comprises a first electrode 12, a second electrode 14 and an electrolyte 16. The first electrode 12 is connected to a first side of the electrolyte 16, and the second electrode 14 is connected to a second side, arranged on the opposite side, of the electrolyte 16. A first current collector 18 is connected to the first electrode 12 and a second current collector 20 is connected to the second electrode 14. The first electrode 12 extends in a first longitudinal direction, substantially parallel to the current flow with respect to the first current collector 18. A mass distribution of the first electrode 12 is decreasing in the first direction with increasing distance to the first current collector 18.

Fig. 2 shows a comparison of the local current density perpendicular to the longitudinal direction of the electrolyte of a standard cell with a fuel cell with an electrode with decreased mass distribution. An exemplary isothermal simulation of the cell with an electrode with decreased mass distribution at constant cell voltage, fuel and oxygen utilization, predicts an increment in gravimetric power density of +15% compared to the standard cell. The weight of the cell with the decreasing mass distribution is for this comparison remained to be the same as the standard cell as the amount of electrode material is equal, but redistributed, whereby the positive effect on the power density can be derived from the higher average current density that is achieved at an equal cell voltage.

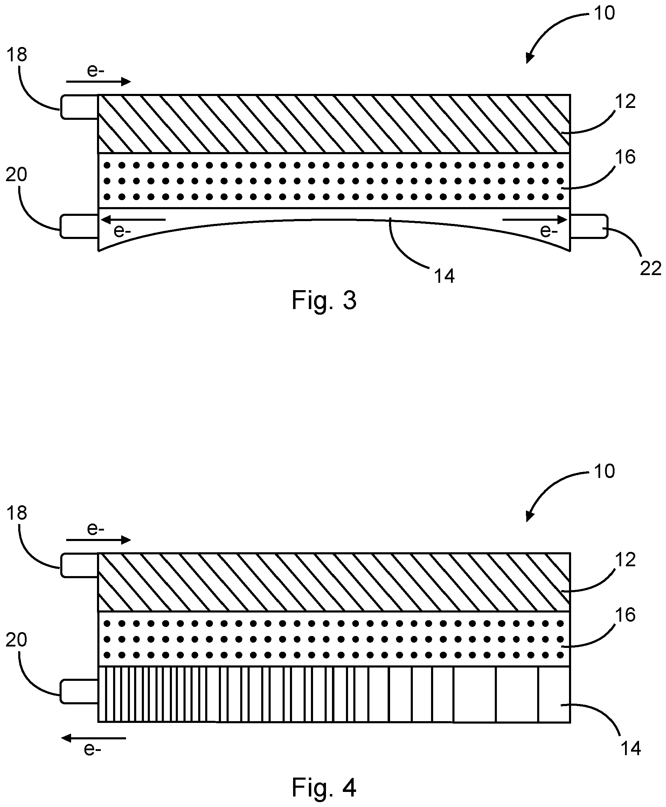

Fig. 3 shows another schematic representation of a cross section of a fuel cell 10 comprising a first electrode 12 with increasing thickness in a first and second longitudinal direction. The fuel cell 10 further comprises a third current collector 22, connected to the first electrode 12, wherein the first electrode 12 extends in a third longitudinal direction, substantially parallel to the current flow with respect to the third current collector. In this embodiment the first and the third longitudinal direction are in the opposite direction. The mass distribution of the first electrode 12 is decreasing in the first longitudinal direction with increasing distance to the first current collector 18 and in the third longitudinal direction with increasing distance to the third current collector 22.

The electrode thickness is reduced in areas where the accumulated current in the longitudinal direction is low. As the accumulated current increases again in areas closer to the third current collector 22, which can occur also in the second longitudinal direction, the electrode is chosen to be thicker again.

Fig. 4 shows another schematic representation of a fuel cell 10 comprising a first electrode 12 with increasing porosity in a first longitudinal direction. The fuel cell comprises a first electrode 12, a second electrode 14, and an electrolyte 16. The first electrode 12 is connected to a first side of the electrolyte 16, and the second electrode 14 is connected to a second side, arranged on the opposite side, of the electrolyte 16. A first current collector 18 is connected to the first electrode 12 and a second current collector 20 is connected to the second electrode 14. The first electrode 12 extends in a first longitudinal direction, substantially parallel to the current flow with respect to the first current collector 18. A mass distribution of the first electrode 12 is decreasing in the first longitudinal direction with increasing distance to the first current collector 18. The mass distribution of the first electrode 12 is decreasing by a change in porosity of the first electrode.

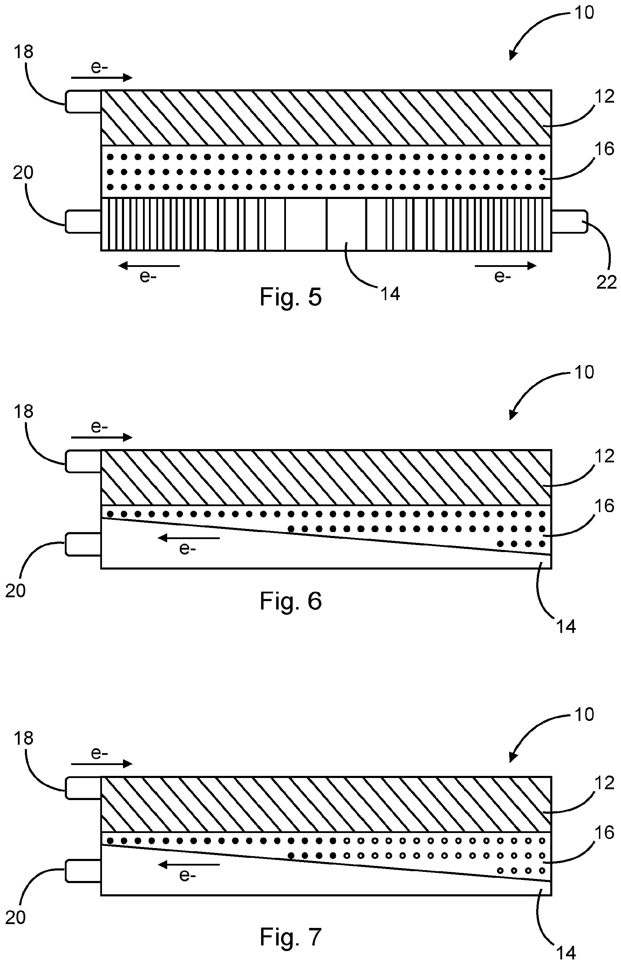

Fig. 5 shows another schematic representation of a fuel cell 10 with a first electrode 12 with increasing porosity in a first and second longitudinal direction. The fuel cell 10 comprises a third current collector 22, connected to the first electrode 12. The first electrode 12 extends in a third longitudinal direction, substantially parallel to the current flow with respect to the third current collector 22. The mass distribution of the first electrode 12 is decreasing in the third longitudinal direction with increasing distance to the third current collector 22 by a change in porosity.

Fig. 6 shows another schematic representation of a fuel cell with a first electrode with increasing thickness in a first longitudinal direction end and an electrolyte 16 with a corresponding thickness. The thickness of the electrolyte 16 varies, such that a thickness of the fuel cell 10 is substantially constant in order to reinforce the mechanical stability of the cell.

Fig. 7 shows another schematic representation of Fig. 6, wherein the electrolyte comprises two different electrolytes. The electrolyte may comprise 8YSZ and 10ScSZ.

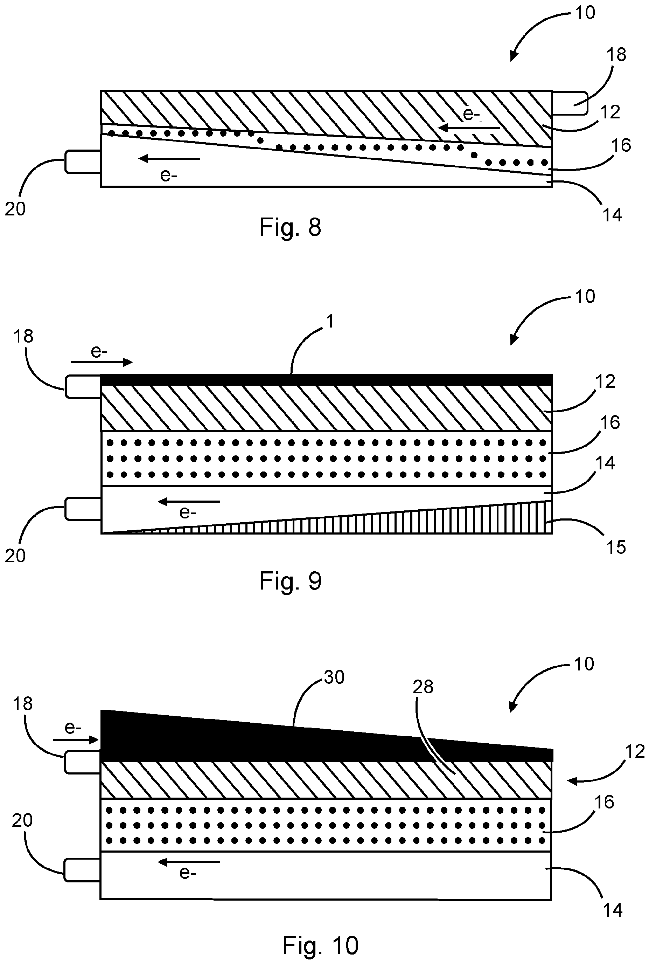

Fig. 8 shows another schematic representation of Fig. 6 comprising a second electrode 14 with increasing thickness in a second longitudinal direction. The first current collector 18 is arranged opposite to the second current collector 20. The thickness of the first 12 and the second 14 electrode decreases with increasing distance to the respective current collectors, such that the thickness of the fuel cell 10 remains substantially constant, preferably constant. The thickness of the electrolyte 16 may vary, or, if the thickness reduction of the first electrode 12 corresponds to the thickness reduction of the second electrode 14, may be constant. Preferably the thickness reduction of the first electrode 12 and the second electrode 14 correspond in order to reinforce the mechanical stability of the cell.

Fig. 9 shows another schematic representation of a fuel cell 10 with a support layer 15. The fuel cell 10 comprises a support layer 26, wherein a thickness of the support layer varies 26, such that the thickness of the fuel cell 10 is substantially constant.

Fig. 10 shows another schematic representation of a fuel cell 10 with a highly conductive layer 30 with reduced thickness at one end. The first electrode 12 comprises an electrode body 28 and a highly conductive layer 30. A thickness of the highly conductive layer 30 is reduced with increasing distance to the second current collector 20. The additional highly conductive layer 30 is preferably a silver layer, or materials with similar material characteristics.

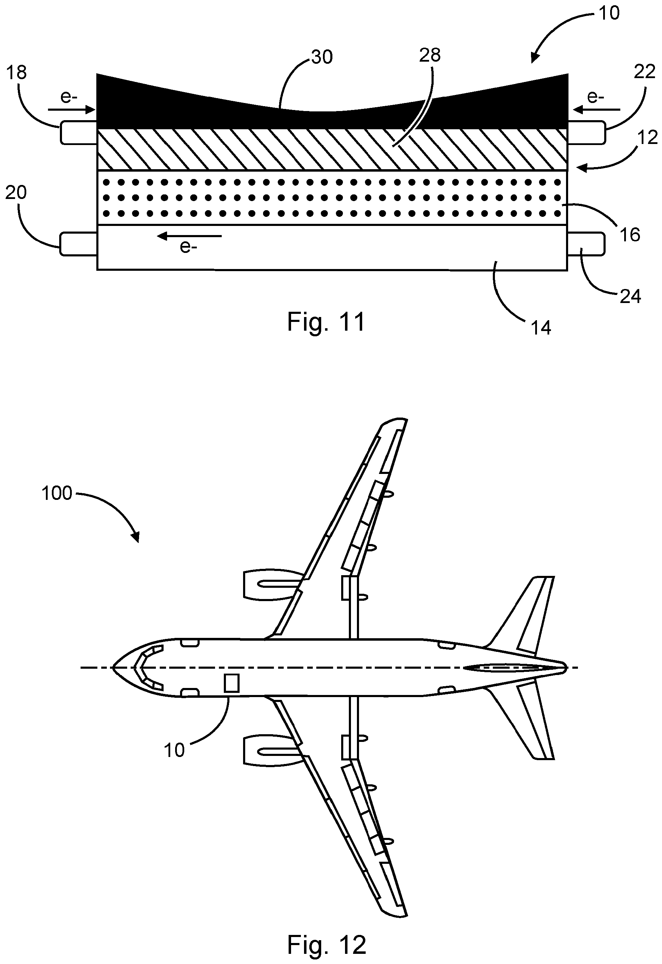

Fig. 11 shows another schematic representation of a fuel cell 10 with a highly conductive layer 30 with increasing thickness in a first and second longitudinal direction. The fuel cell 10 further comprises a third 22 and a fourth 24 current collector. The thickness of the highly conductive layer decreases with respect to the first current collector 18 and the third current collector 22.

Fig. 12 shows a schematic representation of an aircraft with a fuel cell.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of reference signs

- 10: Fuel cell
- 12: First electrode
- 14: Second electrode
- 16: Electrolyte
- 18: First current collector
- 20: Second current collector
- 22: Third current collector
- 24: Fourth current collector
- 26: Support layer
- 28: Electrode body
- 30: Highly conductive layer
- 100: Aircraft

## Claims

1. A fuel cell (10) comprising:
a first electrode (12),
a second electrode (14),
an electrolyte (16),
wherein the first electrode (12) is connected to a first side of the electrolyte (16), and the second electrode (14) is connected to a second side, arranged on the opposite side, of the electrolyte (16),
a first current collector (18), connected to the first electrode (12),
a second current collector (20), connected to the second electrode (14),
wherein the first electrode (12) extends in a first longitudinal direction, substantially parallel to the current flow with respect to the first current collector (18),
wherein a mass distribution of the first electrode (12) is decreasing in the first direction with increasing distance to the first current collector (18).

2. The fuel cell (10) according to claim 1, wherein the second electrode (14) extends in a second longitudinal direction, substantially parallel to the current flow with respect to the second current collector (20),
wherein a mass distribution of the second electrode (14) is decreasing in the second longitudinal direction with increasing distance to the second current collector (20).

3. The fuel cell (10) according to the preceding claims, wherein the fuel cell (10) further comprises a third current collector (22), connected to the first electrode (12),
wherein the first electrode (12) extends in a third longitudinal direction, substantially parallel to the current flow with respect to the third current collector (22),
wherein the mass distribution of the first electrode (12) is decreasing in the third longitudinal direction with increasing distance to the third current collector (22).

4. The fuel cell (10) according to the preceding claims, wherein the fuel cell (10) further comprises a fourth current collector (24), connected to the second electrode (14),
wherein the second electrode (14) extends in a fourth longitudinal direction, substantially parallel to the current flow with respect to the fourth current collector (24),
wherein the mass distribution of the second electrode (14) is decreasing in the fourth longitudinal direction with increasing distance to the fourth current collector (24).

5. The fuel cell (10) according to one of the preceding claims, wherein the electrolyte (16) comprises two or more electrolyte materials.

6. The fuel cell (10) according to claim 6, wherein the electrolyte (16) comprises 8YSZ and 10ScSZ.

7. The fuel cell (10) according to the preceding claims, wherein the mass distribution of the first electrode (12) and/or second electrode (14) is decreasing by a thickness reduction of the first electrode (12) and/or the second electrode (14).

8. The fuel cell (10) according to one of the preceding claims, wherein a thickness of the electrolyte (16) varies, such that a thickness of the fuel cell (10) is substantially constant.

9. The fuel cell (10) according to claims 1 to 7, wherein the fuel cell (10) further comprises a support layer (26), wherein a thickness of the support layer varies (26), such that the thickness of the fuel cell (10) is substantially constant.

10. The fuel cell (10) according to claim 9, wherein the support layer (26) comprises a high temperature resistant metal or a ceramic.

11. The fuel cell (10) according to the preceding claims, wherein the mass distribution of the first electrode (12) and/or the second electrode (14) is decreasing by a change in porosity of the first electrode (12) and/or the second electrode (14).

12. The fuel cell (10) according to the preceding claims, wherein the first electrode (12) and/or the second electrode (14) comprise an electrode body (28) and a highly conductive layer (30).

13. The fuel cell (10) according to claim 9, wherein a thickness of the highly conductive layer (30) is reduced with increasing distance to at least one current collector (18, 20, 22, 24).

14. The fuel cell (10) according to one of the preceding claims,
wherein the fuel cell (10) is one a tubular fuel cell, a flat tubular fuel cell or a monolithic fuel cell.

15. An aircraft (100) comprising a fuel cell (10) according to claim 1 to 14.
